# EUROPÄISCHE PATENTSCHRIFT

(11) **EP 1 183 475 B1**
(45) Veröffentlichungstag und Bekanntmachung des Hinweises auf die Patenterteilung: **15.12.2004**
(21) Anmeldenummer: 01909646.0
(22) Anmeldetag: 18.01.2001
(51) Int. Cl.: F16B 13/06

(54) **DÜBEL ZUR BEFESTIGUNG AN HOHL- UND AN VOLLBAUSTOFFEN**
PLUG TO BE FASTENED TO HOLLOW AND SOLID BUILDING MATERIALS
CHEVILLE DESTINEE A ETRE FIXEE A DES MATERIAUX DE CONSTRUCTION CREUX ET SOLIDES

(30) Priorität: 30.03.2000 DE 10015902
(43) Veröffentlichungstag der Anmeldung: 06.03.2002
(73) Patentinhaber: fischerwerke Artur Fischer GmbH & Co. KG, 72178 Waldachtal (DE)
(72) Erfinder: NEHL, Wolfgang, 72178 Waldachtal (DE)
(86) Internationale Anmeldenummer: PCT/EP2001/000516
(87) Internationale Veröffentlichungsnummer: WO 2001/075314

(56) Entgegenhaltungen:
- EP-A- 0 037 091
- EP-A- 0 560 518
- WO-A-81/01730
- DE-U- 8 321 395
- FR-A- 2 505 946
- US-A- 3 937 122

## Beschreibung

Die Erfindung betrifft einen Dübel zur Befestigung an Hohl- und an Vollbaustoffen mit den Merkmalen des Oberbegriffs des Anspruchs 1. Dabei sind mit Hohlbaustoffen beispielsweise Hohlblockziegel oder Platten, hinter denen sich ein Hohlraum befindet, gemeint. Mit Vollbaustoffen ist beispielsweise Beton oder dgl. gemeint. ( DE83 21 395 A).

Derartige Dübel sind an sich bekannt. Sie sind üblicherweise aus Kunststoff hergestellt und weisen in einem Mittelbereich sich in Längsrichtung erstreckende Spreizschenkel auf, die durch Schlitze voneinander getrennt sind. An einem hinteren Ende sind die Spreizschenkel durch ein hülsenförmiges Dübelende und an einem vorderen Ende durch eine hülsenförmige Dübelspitze miteinander verbunden. Eine Spreizschraube ist durch das hülsenförmige Dübelende durchsteckbar und in die Dübelspitze einschraubbar. Zur Befestigung des Dübels in einem Vollbaustoff wird der Dübel in ein Bohrloch in dem Vollbaustoff eingesetzt und es wird eine Spreizschraube in den Dübel eingeschraubt. Die Spreizschraube drückt die Spreizschenkel auseinander, d. h. die Spreizschraube spreizt die Spreizschenkel auf und verankert dadurch den Dübel im Bohrloch im Vollbaustoff.

In einem Hohlbaustoff oder in einer Platte wird der Dübel durch ein Bohrloch durchgesteckt, so dass sich sein hülsenförmiges Dübelende im Hohlbaustoff befindet. Anschließend wird eine Spreizschraube durch das Dübelende durchgesteckt, zwischen den Spreizschenkeln durchgeführt und in die Dübelspitze eingeschraubt. Durch das Einschrauben der Spreizschraube in die Dübelspitze wird diese auf das Dübelende zubewegt, wobei die Spreizschenkel aufgespreizt werden. Es sind an sich zwei Spreizmöglichkeiten bekannt. Die erste ist, dass die Spreizschenkel durch Annäherung der Dübelspitze an das Dübelende nach außen ausknicken und dadurch den Hohlbaustoff formschlüssig hintergreifen. Die andere Möglichkeit ist, dass sich die Dübelspitze beim Einschrauben der Spreizschraube gegenüber dem Dübelende verdreht, wodurch die Spreizschenkel um einander gewunden werden und ein knotenartiges Gebilde bilden, welches den Hohlbaustoff hintergreift.

Die bekannten Dübel haben den Nachteil einer schlechten Schraubenführung, die Spreizschraube kann beim Eindrehen seitlich durch die Schlitze zwischen den Spreizschenkeln austreten. Weiterer Nachteil der bekannten Dübel ist deren geringe Torsionssteifigkeit, die beim Eindrehen der Spreizschraube zu einer elastischen Verdrehung der Dübelspitze gegenüber dem Dübelende führt. Beim Einschrauben der Spreizschraube von Hand bewirkt die elastische Verdrehung der Dübelspitze in Bezug auf das Dübelende, dass, wenn ein Schraubendreher zum "Nachfassen" gelöst wird, die Dübelspitze zusammen mit der in sie eingeschraubten Spreizschraube wieder zurückdreht. Dies hat zur Folge, dass sich die Spreizschraube von Hand nur schlecht in den Dübel eindrehen lässt.

Der Erfindung liegt die Aufgabe zugrunde, die vorstehend genannten Nachteile zu vermeiden.

Diese Aufgabe wird erfindungsgemäß durch die Merkmale des Anspruchs 1 gelöst. Beim erfindungsgemäßen Dübel mit den Merkmalen des Anspruchs 1 sind die Spreizschenkel in Umfangsrichtung durch ein dehnbares Material miteinander verbunden. Zur Dehnbarkeit kann das Material dünn ausgebildet und/oder in Umfangsrichtung des Dübels wellenförmig sein. Bei der Herstellung des Dübels aus Kunststoff ist das dehnbare Material vorzugsweise einstückig mit den Spreizschenkeln und besteht somit aus demselben Kunststoff wie der übrige Dübel. Das dehnbare Material ist in diesem Fall vorzugsweise dünn als Kunststoffhaut ausgeführt. Durch die Verbindung der Spreizschenkel in Umfangsrichtung erhält der erfindungsgemäße Dübel die Form einer Hülse, die auch im Bereich der Spreizschenkel in Umfangsrichtung geschlossen ist. Dadurch wird eine gute Führung der Spreizschraube erreicht und es wird verhindert, dass die Spreizschraube, selbst bei einer Querbeanspruchung der Spreizschraube, seitlich zwischen den Spreizschenkeln hindurch aus dem Dübel austritt. Weiterer Vorteil der Verbindung der Spreizschenkel in Umfangsrichtung ist eine erhöhte Torsionssteifigkeit des Dübels. Die erhöhte Torsionssteifigkeit hat zunächst den Vorteil, dass sich die Dübelspitze beim Eindrehen der Spreizschraube weniger mitdreht, wodurch sich die Spreizschraube besser in die Dübelspitze einschrauben lässt. Des Weiteren hat die erhöhte Torsionssteifigkeit den Vorteil, dass die Dübelspitze bei einem Nachlassen des Einschraubmoments, also beispielsweise beim Nachfassen eines Schraubendrehers, weniger zurückdreht. Die Spreizschraube ist dadurch, insbesondere beim Eindrehen von Hand, einfacher in den Dübel eindrehbar. Zusätzlich hat der erfindungsgemäße Dübel den Vorteil, dass ein Drehmoment beim Eindrehen der Spreizschraube nach Beginn des Aufspreizens in einem Hohlbaustoff weniger stark nachlässt. Bei den bekannten Spreizdübeln fällt das Drehmoment stark ab, wenn bei einer Befestigung des Dübels an einem Hohlbaustoff die Spreizschenkel begonnen haben auszuknicken oder sich um einander zu winden. Durch die erhöhte Steifigkeit des erfindungsgemäßen Dübels in Folge der Verbindung seiner Spreizschenkel in Umfangsrichtung ist dieser Effekt zumindest geringer. Der Effekt des starken Abfalls des Drehmoments beim Eindrehen der Spreizschraube ist nachteilig, weil er das Gefühl vermittelt, die Spreizschraube oder der Dübel seien durch Überbeanspruchung ausgerissen und hätten deswegen keinen festen Sitz im Hohlbaustoff.

Bei einer Ausgestaltung der Erfindung weist das hülsenförmige Dübelende einen größeren Quermesser als der übrige Teil des Dübels auf. Diese Ausgestaltung hat den Zweck, einen guten Sitz des Dübels in einem Hohl- oder Plattenbaustoff zu erzielen, in dem Dübel im Wesentlichen nur mit seinem hülsenförmigen Dübelende in einem Bohrloch aufgenommen ist und sich der übrige Teil des Dübels in einem Hohlraum befindet.

Bei einer Ausgestaltung der Erfindung weist ein Querschnitt des hülsenförmigen Dübelendes einen sägezahnartigen Umriss auf. Dies bedeutet, das Dübelende weist Radialflächen auf, von deren Außenrand eine Umrisslinie des Dübelendes entgegen einer Eindrehrichtung der Spreizschraube wendelartig nach innen bis zur nächsten Radialfläche verläuft. Die Radialflächen sind also in Eindrehrichtung der Spreizschraube ausgerichtet. Sie bilden in weichen Baustoffen eine Art Widerlager, die sich in den Baustoff eindrükken und eine Verdrehsicherung bilden, die den Dübel beim Eindrehen der Spreizschraube drehfest im Baustoff hält. Die Radialflächen brauchen selbstverständlich nicht exakt radial ausgerichtet zu sein. Insbesondere zusammen mit einem größeren Querschnitt des Dübelendes gegenüber dem übrigen Teil des Dübels ergibt die sägezahnartige Ausbildung des Umrisses des Dübelendes eine gute Verdrehsicherung in weichen Baustoffen, da beim Einbringen des Dübels in ein Bohrloch in einem weichen Baustoff das im Quermesser größere Dübelende den Baustoff in einem das Dübelende umgebenden Bereich verdichtet, so dass die sich in den Baustoff einformenden Radialflächen einen guten Widerhalt im Baustoff erhalten.

Bei einer Ausgestaltung der Erfindung ist die hülsenförmige Dübelspitze mit abgewinkelten, beispielsweise V-förmigen Schlitzen versehen, wobei eine Ecke (Scheitel) oder Spitze der Schlitze vorzugsweise zum vorderen oder zum hinteren Ende des Dübels weist. Durch ihre Abwinklung weisen die Schlitze einen Schenkel mit einer Steigung in Richtung einer Gewindesteigung der Spreizschraube und einen anderen Schenkel mit entgegengesetzter Steigung auf. Die Steigung der Schlitze in der Dübelspitze kann von der Gewindesteigung der Spreizschraube abweichen, lediglich ihre Richtung ist gleich bzw. entgegengerichtet. Die Schenkel der abgewinkelten Schlitze, deren Steigung in Richtung der Gewindesteigung der Spreizschraube verläuft, dienen dem Eingriff der Gewindegänge der Spreizschraube, sie bewirken eine gute Anpassung an unterschiedliche Schraubendurchmesser. Die abgewinkelten Schlitze bewirken einen zuverlässigen Eingriff von Spreizschraube mit kleinem Durchmesser ohne Ausreißen der Spreizschraube aus der Dübelspitze beim Anziehen der Spreizschraube. Zugleich vermeiden die abgewinkelten Schlitze einen großen Drehmomentanstieg beim Eindrehen einer Spreizschraube mit großem Schraubendurchmesser.

Die Schenkel der abgewinkelten Schlitze, deren Steigung der Gewindesteigung der Spreizschraube entgegengerichtet ist, bewirken eine axiale Dehnbarkeit der Dübelspitze, wodurch sich ein axialer Abstand axial hintereinander an der Dübelspitze angebrachter abgewinkelter Schlitze verändert. Dadurch wird eine Anpassung an unterschiedliche Gewindesteigungen des Schraubengewindes der Spreizschraube erreicht.

Bei einer Ausgestaltung der Erfindung weist der Dübel einen Schraubenkanal für die Spreizschraube auf, der innerhalb der hülsenförmigen Dübelspitze einen von einer Kreisform abweichenden Querschnitt aufweist. Der Schraubenkanal weist also innerhalb der Dübelspitze in unterschiedlichen Richtungen unterschiedliche Querabmessungen auf. Auch diese Maßnahme dient der Anpassung des Dübels an unterschiedliche Durchmesser von Spreizschrauben. In Weiterbildung weist der Schraubenkanal innerhalb der Dübelspitze einen flachen, beispielsweise schlitzförmigen Schraubenkanal auf. Auch kann der Schraubenkanal innerhalb der Dübelspitze die Form zweier einander kreuzender Schlitze aufweisen.

Die Erfindung wird nachfolgend anhand eines in der Zeichnung dargestellten Ausführungsbeispiels näher erläutert. Es zeigen:
- Figur 1: einen erfindungsgemäßen Dübel in perspektivischer Darstellung;
- Figur 2: den Dübel aus Figur 1 in Seitenansicht;
- Figur 3: den Dübel aus Figur 1 im Achsschnitt;
- Figur 4: eine Stirnansicht des Dübels aus Figur 1 von hinten;
- Figur 5: eine Stirnansicht des Dübels aus Figur 1 von vorn;
- Figuren 6 - 9: Querschnitte entlang der Linien VI-VI bis IX-IX in Figur 2; und
- Figuren 10 und 11: zwei Anwendungsbeispiele des Dübels aus Figur 1.

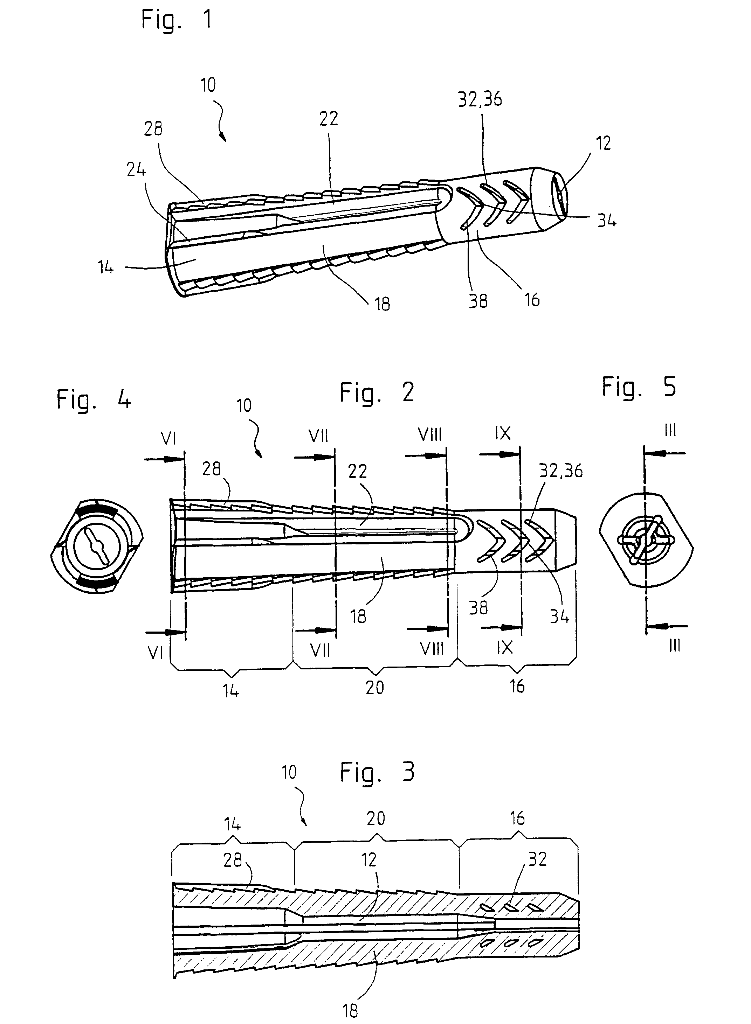

Der in Figuren 1 - 3 dargestellte, erfindungsgemäße Dübel 10 ist aus Kunststoff hergestellt, er weist näherungsweise die Form einer Hülse auf. Der Dübel 10 weist einen Schraubenkanal 12 (Figur 3) für eine in Figuren 1-3 nicht dargestellte Spreizschraube auf, der den Dübel 10 axial durchsetzt und sich an zwei Stellen kegelförmig verjüngt.

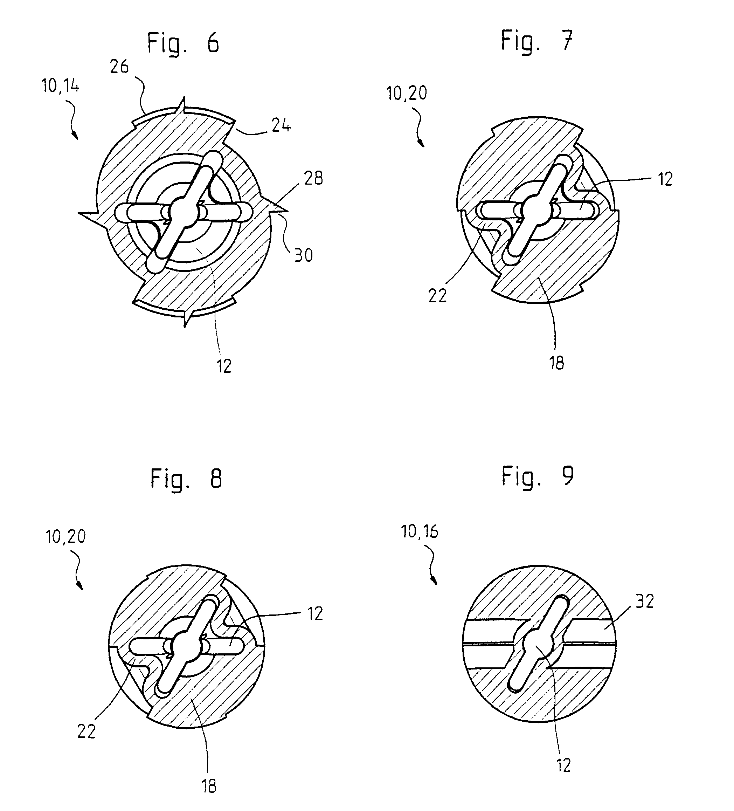

In einem hinteren Bereich weist der Dübel 10 ein hülsenförmiges Dübelende 14 auf, in einem vorderen Bereich eine hülsenförmige Dübelspitze 16, wobei die Dübelspitze 16 durch zwei einander gegenüber angeordneten und in Längsrichtung verlaufende Spreizschenkel 18 einstückig mit dem Dübelende 14 verbunden ist. Die Spreizschenkel 18 definieren einen Spreizbereich 20 des Dübels 10, der sich vom Dübelende 14 zur Dübelspitze 16 erstreckt. In Umfangsrichtung sind die Spreizschenkel 18 durch ein dehnbares Material 22 miteinander verbunden. Das dehnbare Material 22 besteht aus demselben Kunststoff wie der übrige Dübel 10, das dehnbare Material 22 ist einstückiger Bestandteil des Dübels 10. Das dehnbare Material 22 ist als dünne Haut 22 ausgebildet, die die Spreizschenkel 18 in Umfangsrichtung miteinander verbindet (vgl. die Querschnitte des Spreizbereichs 20 in Figuren 7 und 8). Die dünne Haut 22 weist eine Wellung in Umfangsrichtung auf. Die dünne Haut 22 ist sowohl durch ihre Wellung als auch durch ihre dünne Ausbildung und die Dehnbarkeit des Kunststoffs, aus dem sie besteht, in Umfangsrichtung des Dübels 10 dehnbar, bei einer Überbeanspruchung kann die dünne Haut 22 reißen.

Das hülsenförmige Dübelende 14 weist einen größeren Quer- oder Durchmesser als die Dübelspitze 16 und der Dübel 10 im Spreizbereich 20 auf, was in der Zeichnung allerdings schlecht erkennbar ist. Zudem weist das hülsenförmige Dübelende 14 einen sägezahnartigen Umriss auf, wie er in Figur 6 sichtbar ist. Das Dübelende 14 weist zwei einander gegenüberliegende Radialflächen 24 auf, die einer Eindrehrichtung der in Figuren 1 - 3 nicht dargestellten Spreizschraube zugewandt sind. An Außenränder der Radialflächen 24 schließen sich Umrisslinien oder Umrissflächen 26 an, die entgegen der Eindrehrichtung der Spreizschraube wendelförmig nach innen bis zur jeweils gegenüberliegenden Radialfläche 24 verlaufen. Die Radialflächen 24 dienen der Verdrehsicherung des Dübels 10 in einem Bohrloch beim Eindrehen der Spreizschraube.

Zwischen den genannten Radialflächen 24 stehen in Dübellängsrichtung verlaufende Verdrehsicherungsrippen 28 vom Dübelende 14 ab. Die Verdrehsicherungsrippen 28 weisen einen sägezahnförmigen Querschnitt auf, ihre in Eindrehrichtung der Spreizschraube weisenden Flächen bilden ebenfalls Radialflächen 30 des Dübels 10.

Die hülsenförmige Dübelspitze 16 ist mit abgewinkelten Schlitzen 32 versehen, deren Spitze oder Ecke 34 nach vorn gerichtet ist. Die Schlitze 32 sind an zwei Stellen einander gegenüberliegend an der Dübelspitze 16 angeordnet und es sind mehrere (drei) Schlitze 32 mit axialem Abstand voneinander an der Dübelspitze 16 angeordnet. Die abgewinkelten Schlitze 32 weisen Schenkel 36, 38 auf, wobei ein Schenkel 36 eine Steigung in Richtung einer Gewindesteigung der in Figuren 1-3 nicht dargestellten Spreizschraube und der andere Schenkel 38 eine Steigung in entgegengesetzter Richtung aufweist. Die Steigung der Schenkel 36 muss nicht mit der Gewindesteigung der Spreizschraube übereinstimmen, die Steigung geht nur in derselben Richtung.

Der Schraubenkanal 12 weist im Bereich des Dübelendes 14 in etwa einen kreisförmigen Querschnitt auf, er verjüngt sich im Spreizbereich 20 zu zwei einander kreuzenden Schlitzen (Figuren 7 und 8) und hat in der Dübelspitze 16 die Form eines Schlitzes (Figur 9). Dies ermöglicht eine gute Anpassung des Schraubenkanals 12 an Spreizschrauben mit unterschiedlichem Durchmesser.

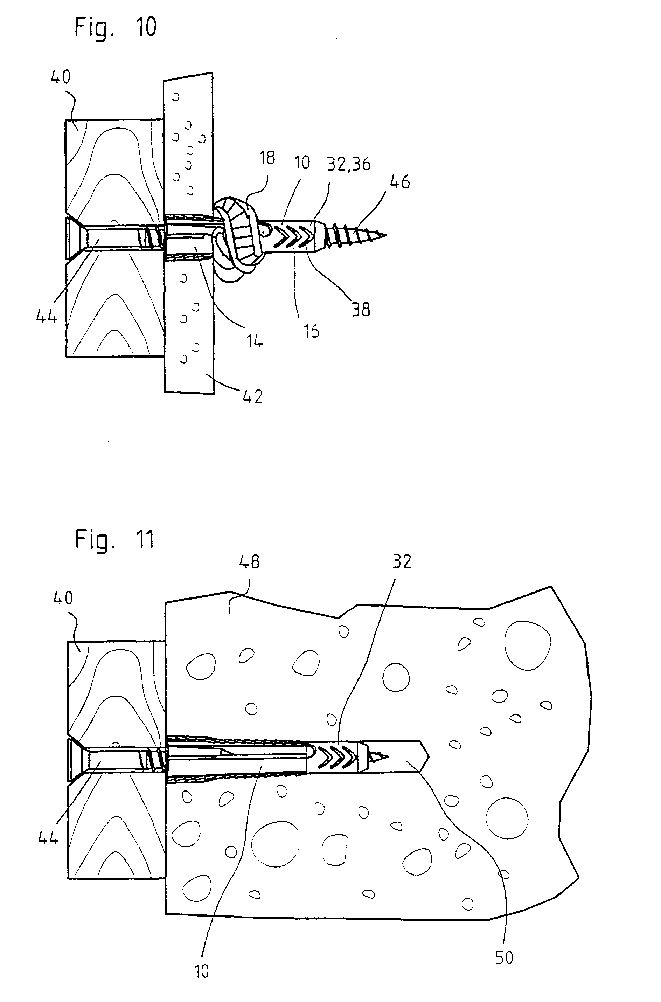

Die Funktion des erfindungsgemäßen Dübels 10 wird nachfolgend anhand Figuren 10 und 11 erläutert: Figur 10 zeigt die Befestigung eines Gegenstandes 40 an einem plattenförmigen Baustoff 42. Der Dübel 10 ist in ein Bohrloch im plattenförmigen Baustoff 42 eingesetzt. Aufgrund des größeren Quermessers des Dübelendes 14 weitet das Dübelende 14 das Bohrloch auf und verfestigt dabei den das Dübelende 14 umgebenden Baustoff. Zugleich formt sich das Dübelende 14 mit seinem sägezahnförmigen Umriss (Figur 6) in den Baustoff 42 ein, die Radialflächen 24, 30 bilden Widerlagerflächen, die ein Mitdrehen des Dübels 10 beim Eindrehen einer Spreizschraube 44 verhindern.

Nach dem Einsetzen des Dübels 10 wird der mit einem Bohrloch versehene, zu befestigende Gegenstand 40 an den plattenförmigen Baustoff 42 gehalten und es wird die Spreizschraube 44 durch den Gegenstand 40 gesteckt und in den Dübel 10 eingedreht. Dabei schneidet sich ein Schraubengewinde 46 der Spreizschraube 44 in die Dübelspitze 16 ein und das Schraubengewinde 46 kommt in Eingriff mit den Schenkeln 36 der abgewinkelten Schlitze 32, die eine Steigung in dieselbe Richtung wie das Schraubengewinde 46 der Spreizschraube 44 aufweisen. Die Schenkel 38 der abgewinkelten Schlitze 32, die eine Steigung in entgegengesetzter Richtung aufweisen, ermöglichen eine axiale Dehnung der Dübelspitze 16, so dass sich der axiale Abstand der Schlitze 32 voneinander an eine Gewindesteigung des Schraubengewindes 46 anpasst. In Verbindung mit dem in der Dübelspitze 16 flachen, schlitzförmigen Schraubenkanal 12 bewirken die abgewinkelten Schlitze 32 eine gute Anpassung der Dübelspitze 16 an einen Durchmesser der jeweils verwendeten Spreizschraube sowie an die Steigung ihres Schraubengewindes 46.

Beim Eindrehen und Anziehen zieht die Spreizschraube 44 die Dübelspitze 16 in Richtung des Dübelendes 14, ein Abstand zwischen der Dübelspitze 16 und dem Dübelende 14 verkürzt sich. Dabei winden sich die Spreizschenkel 18 knotenartig umeinander, so dass die Spreizschenkel 18 des Dübels 10 den plattenförmigen Baustoff 42 formschlüssig hintergreifen, wodurch sich eine gute Verankerung des Dübels 10 auch an einem plattenförmigen Baustoff 42 geringer Festigkeit wie beispielsweise Gipskarton ergibt. Die Häute 22 (Figuren 1, 2, 7, 8), die die Spreizschenkel 18 in Umfangsrichtung miteinander verbinden, bewirken eine hohe Torsionssteifigkeit des Dübels 10. Die Häute 22 wirken einer Verdrehung der Dübelspitze 16 gegenüber dem Dübelende 14 beim Eindrehen und Anziehen der Spreizschraube 44 entgegen und verhindern dadurch insbesondere ein weites Rückdrehen der Dübelspitze 16, wenn beim Eindrehen der Spreizschraube 44 von Hand ein Schraubendreher zum Nachgreifen losgelassen werden muss. Des Weiteren vermeiden die Häute 22 einen starken Abfall des Eindrehmoments der Spreizschraube 44 nach Beginn des Windens der Spreizschenkel 18 um einander. Ein solcher Drehmomentabfall würde das Gefühl vermitteln, die Spreizschraube 44 wäre aus dem Dübel 10 oder dieser aus dem Baustoff 42 ausgerissen und nur schlecht verankert.

In Figur 11 ist die Verankerung eines Gegenstandes 40 an einem Vollbaustoff 48 wie beispielsweise Beton dargestellt. Hier wird der Spreizdübel 10 in an sich bekannter Weise in ein Bohrloch 50 im Vollbaustoff eingesetzt, der Gegenstand 40 wird angesetzt und die Spreizschraube 44 durch den Gegenstand 40 durchgesteckt und in den Dübel 10 eingedreht. Die Spreizschraube 44 drückt die Spreizschenkel 18 auseinander und verankert dadurch den Spreizdübel 10 im Bohrloch 50. Das Auseinanderdrücken, also Aufspreizen der Spreizschenkel 18 wird von den dünnen, die Spreizschenkel 18 in Umfangsrichtung verbindenden Häuten 22 nicht behindert, da diese dünn sind und eine Wellung aufweisen und deswegen in Umfangsrichtung dehnbar sind. Die dünnen Häute 22, die die Spreizschenkel 18 im Spreizbereich 20 zu einer Art Hülse verbinden, verhindern, dass die Spreizschraube 44 beim Eindrehen seitlich zwischen den Spreizschenkeln 18 aus dem Schraubenkanal 12 austreten kann. Diese Gefahr besteht ohne die dünnen Häute 22 insbesondere, wenn die Spreizschraube 44 vom Gegenstand 40 in Querrichtung belastet wird. Der flache, schlitzförmige Schraubenkanal 12 sowie die abgewinkeiten Schlitze 32 ermöglichen auch in einem harten und unnachgiebigen Vollbaustoff 48 wie beispielsweise Beton ein Eindrehen der Spreizschraube 44 mit vergleichsweise geringem Drehmoment.

## Patentansprüche

1. Dübel zur Befestigung an Hohl- und an Vollbaustoffen, mit sich in Längsrichtung erstreckenden Spreizschenkeln, die durch Eindrehen einer Spreizschraube in den Dübel aufspreizbar sind, wobei die Spreizschenkel an einem hinteren Ende durch ein hülsenförmiges Dübelende, durch das die Spreizschraube durchsteckbar ist, und an einem vorderen Ende durch eine hülsenförmige Dübelspitze, in die die Spreizschraube einschraubbar ist, miteinander verbunden sind, **dadurch gekennzeichnet, dass** die Spreizschenkel (18) über ihre Länge im Wesentlichen durchgehend in Umfangsrichtung durch ein dehnbares Material (22) miteinander verbunden sind.

2. Dübel nach Anspruch 1, **dadurch gekennzeichnet, dass** das Dübelende (14) einen größeren Quermesser als der Dübel (10) im Bereich der Spreizschenkel (18) und der Dübelspitze (16) aufweist.

3. Dübel nach Anspruch 1, **dadurch gekennzeichnet, dass** ein Querschnitt des Dübelendes (14) einen sägezahnartigen Umriss aufweist, wobei die Sägezahnform in Eindrehrichtung der Spreizschraube (44) weist.

4. Dübel nach Anspruch 1, **dadurch gekennzeichnet, dass** die Dübelspitze (16) abgewinkelte Schlitze (32) aufweist, wobei ein Schenkel (36) der Schlitze (32) eine Steigung in Richtung einer Gewindesteigung der Spreizschraube (44) und ein anderer Schenkel (38) eine Steigung in entgegengesetzter Richtung aufweist.

5. Dübel nach Anspruch 1, **dadurch gekennzeichnet, dass** ein Schraubenkanal (12) des Dübels (10) für die Spreizschraube (44) innerhalb der Dübelspitze (16) einen von einer Kreisform abweichenden Querschnitt aufweist.

6. Dübel nach Anspruch 1, **dadurch gekennzeichnet, dass** der Schraubenkanal (12) zumindest innerhalb der Dübelspitze (16) einen flachen Querschnitt aufweist.

7. Dübel nach Anspruch 6, **dadurch gekennzeichnet, dass** der Schraubenkanal (12) schlitzförmig ist.

8. Dübel nach Anspruch 7, **dadurch gekennzeichnet, dass** der Schraubenkanal (12) die Form zweier einander kreuzender Schlitze aufweist.

## Claims

1. Plug for fastening to hollow building materials and to solid building materials, having expansion limbs extending longitudinally, which are arranged to expand as a result of screwing an expansion screw into the plug, the expansion limbs being connected to one another at a rear end by a sleeve-like plug end, through which the expansion screw is arranged to be pushed, and at a forward end by a sleeve-like plug tip, into which the expansion screw is arranged to be screwed, **characterised in that** the expansion limbs (18) are, substantially continuously over their length, connected to one another in a peripheral direction by an expandable material (22).

2. Plug according to claim 1, **characterised in that** the plug end (14) has a larger transverse dimension than the plug (10) in the region of the expansion limbs (18) and of the plug tip (16).

3. Plug according to claim 1, **characterised in that** the plug end (14) has a cross-section that has a sawtooth-like contour, the sawtooth shape facing in the screwing direction of the expansion screw (44).

4. Plug according to claim 1, **characterised in that** the plug tip (16) has angled slits (32), one leg (36) of the slits (32) having a pitch in the same direction as the pitch of the thread on the expansion screw (44) and another leg (38) having a pitch in the opposite direction.

5. Plug according to claim 1, **characterised in that** a screw channel (12) of the plug (10) for the expansion screw (44) within the plug tip (16) has a cross-section that is other than circular in shape.

6. Plug according to claim 1, **characterised in that** the screw channel (12) has a flat cross-section at least within the plug tip (16).

7. Plug according to claim 6, **characterised in that** the screw channel (12) is slot-shaped.

8. Plug according to claim 7, **characterised in that** the screw channel (12) has the shape of two slots that cross one another.

## Revendications

1. Cheville de fixation sur des matériaux de construction creux et pleins, avec des segments d'expansion s'étendant dans le sens longitudinal, qui peuvent s'écarter lorsqu'une vis à expansion est vissée dans la cheville, les segments d'expansion étant reliés les uns aux autres à une extrémité arrière par une extrémité de cheville en forme de douille, à travers laquelle la vis à expansion peut passer, et à une extrémité avant par une pointe de cheville en forme de douille, dans laquelle la vis à expansion peut être vissée, **caractérisée en ce que** les segments d'expansion (18) sont reliés les uns aux autres par un matériau extensible (22) sur toute leur longueur et, pour l'essentiel, de manière continue dans le sens de leur circonférence.

2. Cheville selon la revendication 1, **caractérisée en ce que** l'extrémité de la cheville (14) comporte une lame transversale plus grande que la cheville (10) dans la zone du segment d'expansion (18) et de la pointe de la cheville (16).

3. Cheville selon la revendication 1, **caractérisée en ce que** une section transversale de l'extrémité de la cheville (14) comporte un contour en dents de scie, la forme en dents de scie étant dirigée dans le sens de vissage de la vis à expansion (44).

4. Cheville selon la revendication 1, **caractérisée en ce que** la pointe de la cheville (16) comprend des fentes coudées (32), un segment (36) des fentes (32) comprenant un pas dans la direction d'un pas de filetage de la vis à expansion (44) et un autre segment (38) comprenant un pas dans le sens inverse.

5. Cheville selon la revendication 1, **caractérisée en ce que** un canal à vis (12) de la cheville (10) pour la vis à expansion (44) comporte une section transversale divergeant d'une forme circulaire à l'intérieur de la pointe de la cheville (16).

6. Cheville selon la revendication 1, **caractérisée en ce que** le canal à vis (12) comprend une section transversale plate au moins à l'intérieur de la pointe de la cheville (16) .

7. Cheville selon la revendication 6, **caractérisée en ce que** le canal à vis (12) est en forme de fente.

8. Cheville selon la revendication 7, **caractérisée en ce que** le canal à vis (12) a la forme de deux fentes qui se croisent.
